# EUROPEAN PATENT APPLICATION

(11) **EP 4 810 783 A1**
(43) Date of publication of application: **23.09.2026**
(21) Application number: 26166896.6
(22) Date of filing: 23.03.2026
(51) Int. Cl.: F02C 7/32, F02C 7/36, F01D 15/10

(54) **ELECTRIC ASSEMBLY FOR A HYBRID-ELECTRIC AIRCRAFT PROPULSION SYSTEM**

(30) Priority: 21.03.2025 US 202519087119
(71) Applicant: RTX Corporation, Farmington, CT 06032 (US)
(72) Inventor: CLARK, Thomas E., Wells, 04090 (US); CHOE, Jung Muk, Glastonbury, 06033 (US); AKIN, John, Charlotte, 28205 (US)
(74) Representative: Dehns

(57) **Abstract**

A hybrid-electric aircraft propulsion system includes a gas turbine engine, an electrical assembly, and a gear train (60). The gas turbine engine includes a first rotational assembly (40) rotatable about a rotational axis of the gas turbine engine. The electrical assembly includes a plurality of electric machines (70). The plurality of electric machines (70) includes a first electric machine (76) and a second electric machine (78). The gear train (60) includes a first shaft (84), a second shaft (92), a third shaft (96), a first gear (88), a second gear (98), and a transmission assembly (94). The first shaft (84) couples the first electric machine (76) with the first rotational assembly (40). The second shaft (92) is coupled with the second electric machine (78). The second shaft (92) is selectively coupled with the third shaft (96) by the transmission assembly (94). The first gear (88) is mounted on the first shaft (84). The second gear (98) is mounted on the third shaft (96) and engaged with the first gear (88).

## Description

### BACKGROUND

### 1. Technical Field

This disclosure relates generally to hybrid-electric propulsion systems for aircraft and, more particularly, to electric machine assemblies for a propulsion system powertrain.

### 2. Background Information

Hybrid-electric propulsion systems for aircraft include electrical equipment, such as electric machines, configured to operate with an engine to provide thrust for an associated aircraft. Various hybrid-electric aircraft propulsion system configurations and methods for their use are known in the art. While these known systems and methods may be useful for their intended purposes, there is always room in the art for improvement.

### SUMMARY

According to an aspect of the present disclosure, a hybrid-electric aircraft propulsion system includes a gas turbine engine, an electrical assembly, and a gear train. The gas turbine engine includes a first rotational assembly rotatable about a rotational axis of the gas turbine engine. The electrical assembly includes a plurality of electric machines. The plurality of electric machines includes a first electric machine and a second electric machine. The gear train includes a first shaft, a second shaft, a third shaft, a first gear, a second gear, and a transmission assembly. The first shaft couples the first electric machine with the first rotational assembly. The second shaft is coupled with the second electric machine. The second shaft is selectively coupled with the third shaft by the transmission assembly. The first gear is mounted on the first shaft. The second gear is mounted on the third shaft and engaged with the first gear.

In any of the aspects or examples described above and herein, the first shaft may form a direct drive coupling between the first electric machine and the first rotational assembly.

In any of the aspects or examples described above and herein, the transmission assembly may form a multi-speed transmission coupling the second shaft with the third shaft.

In any of the aspects or examples described above and herein, the gas turbine engine may include a second rotational assembly, the plurality of electric machines may include a third electric machine, the gear train may include a fourth shaft, and the fourth shaft may couple the third electric machine with the second rotational assembly.

In any of the aspects or examples described above and herein, the gear train may include a fifth shaft, a third gear, and a fourth gear, the transmission assembly may selectively couple the fifth shaft and the second shaft, the third gear may be mounted on the fourth shaft, and the fourth gear may be mounted on the fifth shaft and engaged with the third gear.

In any of the aspects or examples described above and herein, the first rotational assembly may form a high-pressure spool of the gas turbine engine and the second rotational assembly may form a low-pressure spool of the gas turbine engine.

In any of the aspects or examples described above and herein, the hybrid-electric aircraft propulsion system may further include at least one accessory load being coupled with the first shaft at the first gear.

In any of the aspects or examples described above and herein, the hybrid-electric aircraft propulsion system may further include a controller connected in signal communication with the first electric machine, the second electric machine, and the transmission assembly, the controller may include a processor being connected in signal communication with a non-transitory memory storing instructions which, when executed by the processor, may cause the processor to execute an engine start sequence for the gas turbine engine by controlling the first electric machine and the second electric machine to apply a first rotational force and a second rotational force, respectively, to the first rotational assembly, controlling the second electric machine to stop applying the second rotational force to the first rotational assembly at a first rotation speed of the first rotational assembly, and controlling the first electric machine to stop applying the first rotational force to the first rotational assembly at a second rotation speed of the first rotational assembly, the second rotation speed greater than the first rotation speed.

In any of the aspects or examples described above and herein, the instructions, when executed by the processor, may further cause the processor to execute the engine start sequence for the gas turbine engine by controlling the second electric machine to stop applying the second rotational force to the first rotational assembly by controlling the transmission assembly in a neutral mode to disengage the second electric machine from the first rotational assembly.

In any of the aspects or examples described above and herein, the instructions, when executed by the processor, may further cause the processor to execute the engine start sequence for the gas turbine engine by: controlling the second electric machine to apply the second rotational force to the first rotational assembly by controlling the transmission assembly to couple the second electric machine with the first rotational assembly at a first gear ratio and controlling the second electric machine to stop applying the second rotational force to the first rotational assembly by controlling the transmission assembly in a generator mode to couple the second electric machine with the first rotational assembly at a second gear ratio different than the first gear ratio.

According to another aspect of the present disclosure, a method for executing an engine start sequence for a gas turbine engine of a hybrid-electric aircraft propulsion system includes applying a first rotation force and a second rotational force to a first rotational assembly of the gas turbine engine with a first electric machine and a second electric machine, respectively. The first electric machine is coupled with the first rotational assembly by a first shaft. The second electric machine is coupled with the first rotational assembly by a second shaft, a third shaft, a first gear, a second gear, and a transmission assembly. The second shaft is coupled with the second electric machine. The transmission assembly couples the second shaft and the third shaft. The first gear is mounted on the first shaft. The second gear is mounted on the third shaft and engaged with the first gear. The method further includes stopping applying the second rotational force to the first rotational assembly with the second electric machine at a first rotation speed of the first rotational assembly and stopping applying the first rotational force to the first rotational assembly with the first electric machine at a second rotation speed of the first rotational assembly. The second rotation speed is greater than the first rotation speed.

In any of the aspects or examples described above and herein, the method may further include driving one or both of the first electric machine or the second electric machine with the first rotational assembly to generate electrical power subsequent to stopping applying the first rotational force and the second rotational force.

In any of the aspects or examples described above and herein, stopping applying the second rotational force to the first rotational assembly with the second electric machine may include disengaging the second electric machine from the first rotational assembly with the transmission assembly.

In any of the aspects or examples described above and herein, applying the second rotational force to the first rotational assembly with the second electric machine may include coupling the second electric machine and the first rotational assembly with the transmission assembly at a first gear ratio and stopping applying the second rotational force to the first rotational assembly with the second electric machine may include coupling the second electric machine and the first rotational assembly with the transmission assembly at a second gear ratio different than the first gear ratio.

In any of the aspects or examples described above and herein, the second rotation speed may be a windmill relight assistance speed for the gas turbine engine.

In any of the aspects or examples described above and herein, applying the first rotation force and the second rotational force to the first rotational assembly with the first electric machine and the second electric machine, respectively, may include operating the first electric machine at a first output torque applied at the first shaft and operating the second electric machine at a second output torque applied at the first shaft, and the second output torque may be greater than the first output torque.

According to another aspect of the present disclosure, a hybrid-electric aircraft propulsion system includes a gas turbine engine, an electrical assembly, and a gear train. The gas turbine engine includes a first rotational assembly and a second rotational assembly. The first rotational assembly and the second rotational assembly are rotatable about a rotational axis of the gas turbine engine. The electrical assembly includes a plurality of electric machines. The plurality of electric machines include a first electric machine, a second electric machine, and a third electric machine. The gear train includes a first shaft, a second shaft, a third shaft, a fourth shaft, a first gear, a second gear, and a transmission assembly. The first shaft couples the first electric machine with the first rotational assembly. The second shaft is coupled with the second electric machine. The transmission assembly is configured to couple the second shaft with the third shaft. The first gear is mounted on the first shaft, the second gear is mounted on the third shaft and engaged with the first gear. The fourth shaft couples the third electric machine with the second rotational assembly.

In any of the aspects or examples described above and herein, the third electric machine may be mechanically independent of the first electric machine, the second electric machine, and the first rotational assembly.

In any of the aspects or examples described above and herein, the transmission assembly may be configured to couple the fourth shaft with the second shaft.

In any of the aspects or examples described above and herein, the gear train may include a fifth shaft, a third gear, and a fourth gear, the transmission assembly may selectively couple the fifth shaft and the second shaft, the third gear may be mounted on the fourth shaft, and the fourth gear may be mounted on the fifth shaft and engaged with the third gear.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood; however, the following description and drawings are intended to be exemplary in nature and non-limiting.

### BRIEF DESCRIPTION OF THE DRAWINGS

FIG. 1 illustrates a perspective view of an aircraft including a propulsion system, in accordance with one or more embodiments of the present disclosure.
FIG. 2 schematically illustrates a cutaway, side view of a hybrid-electric propulsion system for an aircraft, in accordance with one or more embodiments of the present disclosure.
FIG. 3 schematically illustrates an accessory gear train and electric machines for the hybrid-electric propulsion system, in accordance with one or more embodiments of the present disclosure.
FIG. 4 schematically illustrates the electric machines and another accessory gear train for the hybrid-electric propulsion system, in accordance with one or more embodiments of the present disclosure.
FIG. 5 illustrates a block diagram depicting a method for executing a gas turbine engine start sequence, in accordance with one or more embodiments of the present disclosure.
FIG. 6 illustrates a graph depicting electric machine torque output vs. rotational assembly speed for an engine start sequence, in accordance with one or more embodiments of the present disclosure.
FIG. 7 illustrates a graph depicting electric machine power output vs. rotational assembly speed for an engine start sequence, in accordance with one or more embodiments of the present disclosure.
FIG. 8 illustrates a graph depicting electric machine speed vs. rotational assembly speed for an engine start sequence, in accordance with one or more embodiments of the present disclosure.

### DETAILED DESCRIPTION

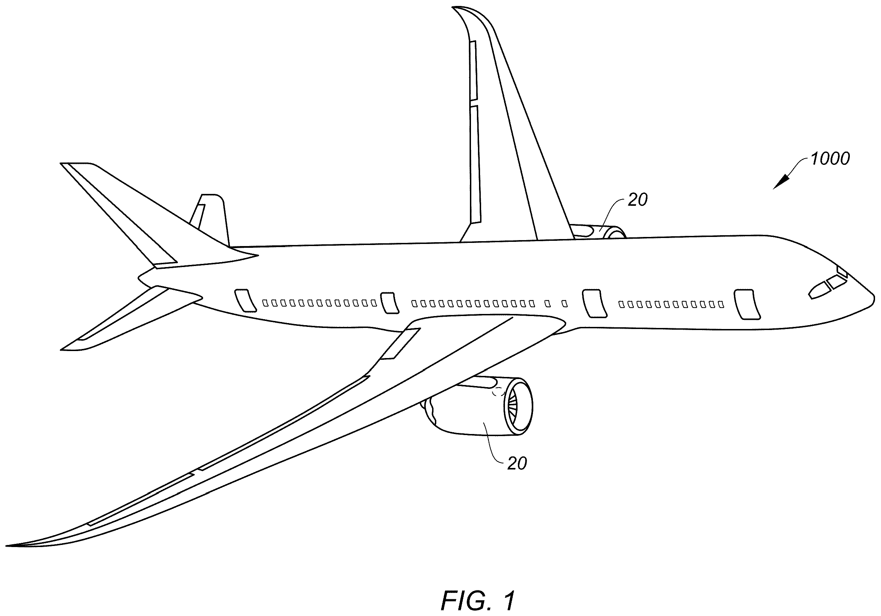

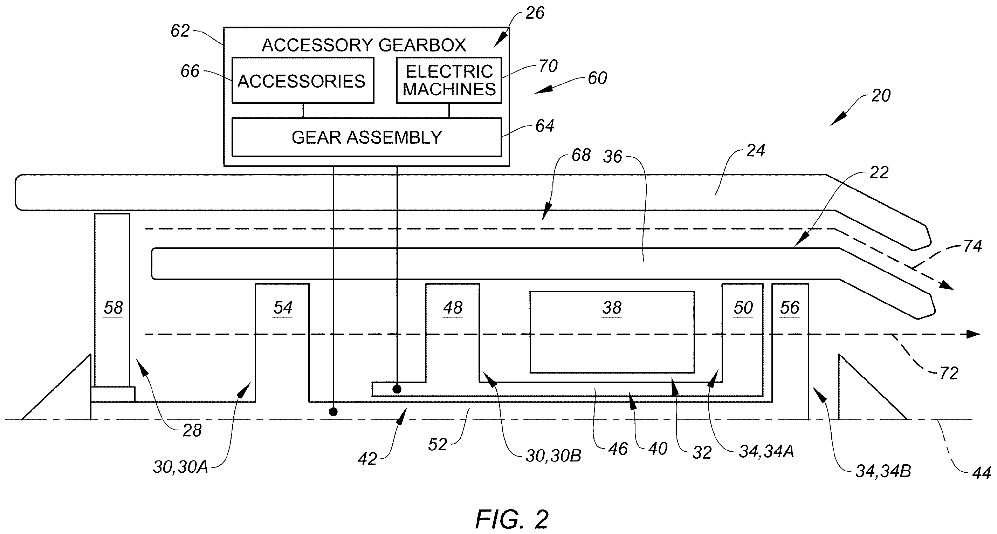

FIG. 1 illustrates a propulsion system 20 for an aircraft 1000. FIG. 2 schematically illustrates a cutaway, side view of the propulsion system 20. The propulsion system 20 of FIG. 2 is configured as a hybrid-electric propulsion system. The propulsion system 20 includes a gas turbine engine 22, a nacelle 24, and an electrical assembly 26.

The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, and/or a propfan (e.g., an open rotor) gas turbine engine.

The gas turbine engine 22 of FIG. 2 includes a fan section 28, a compressor section 30, a combustor section 32, a turbine section 34, and an engine static structure 36. The compressor section 30 includes a low-pressure compressor (LPC) 30A and a high-pressure compressor (HPC) 30B. The combustor section 32 includes a combustor 38 (e.g., an annular combustor). The turbine section 34 includes a high-pressure turbine (HPT) 34A and a low-pressure turbine (LPT) 34B. The compressor section 30, the combustor section 32, and the turbine section 34 may collectively be referred to as an "engine core."

Components of the fan section 28, the compressor section 30, and the turbine section 34 form a first rotational assembly 40 (e.g., a high-pressure (HP) spool) and a second rotational assembly 42 (e.g., a low-pressure (LP) spool) of the gas turbine engine 22. The first rotational assembly 40 and the second rotational assembly 42 are mounted for rotation about a rotational axis 44 (e.g., an axial centerline) of the gas turbine engine 22 relative to the engine static structure 36.

The first rotational assembly 40 includes a first shaft 46, a bladed first compressor rotor 48 for the high-pressure compressor 30B, and a bladed first turbine rotor 50 for the high-pressure turbine 34A. The first shaft 46 interconnects the bladed first compressor rotor 48 and the bladed first turbine rotor 50.

The second rotational assembly 42 includes a second shaft 52, a bladed second compressor rotor 54 for the low-pressure compressor 30A, a bladed second turbine rotor 56 for the low-pressure turbine 34B, and a bladed fan rotor 58 for the fan section 28. The second shaft 52 interconnects the bladed second compressor rotor 54 and the bladed second turbine rotor 56. The second shaft 52 may additionally interconnect the bladed fan rotor 58 with the bladed second compressor rotor 54 and the bladed second turbine rotor 56. Alternatively, the second shaft 52 may be coupled with the bladed fan rotor 58 by a gear train (e.g., a reduction gear assembly, an epicyclic gear assembly, a transmission, etc.), which may enable the bladed fan rotor 58 to operate at a different (e.g., slower) rotational speed than the bladed second compressor rotor 54, the bladed second turbine rotor 56, and the second shaft 52. The first shaft 46 and the second shaft 52 are concentric and configured to rotate about the rotational axis 44. The present disclosure, however, is not limited to concentric configurations of the first shaft 46 and the second shaft 52.

The engine static structure 36 may include one or more engine cases, cowlings, bearing assemblies, and/or other non-rotating structures configured to house and/or support (e.g., rotationally support) components of the gas turbine engine 22 sections 28, 30, 32, 34.

The gas turbine engine 22 further includes an accessory gear train 60 coupled with the first rotational assembly 40 and the second rotational assembly 42. For example, the accessory gear train 60 of FIG. 2 includes an accessory gear box 62. The accessory gear box 62 includes a gear assembly 64 coupling the first rotational assembly 40 and/or the second rotational assembly 42 with one or more accessory loads 66 of the gas turbine engine 22. Examples of the accessory loads 66 include fuel pumps, hydraulic pumps, oil pumps, electrical generators, de-oilers, air compressors, permanent magnet alternators, and the like.

The nacelle 24 forms an aerodynamic exterior of the propulsion system 20 and a housing for the gas turbine engine 22. The nacelle 24 extends circumferentially about (e.g., completely around) the rotational axis 44. The nacelle 24 extends axially along the rotational axis 44 circumscribing the gas turbine engine 22. The nacelle 24 forms a bypass duct 68 radially between the nacelle 24 and the gas turbine engine 22 (e.g., the engine static structure 36) through the propulsion system 20.

The electrical assembly 26 includes a plurality of electric machines 70 coupled with the gear assembly 64. Each of the electric machines 70 may be coupled with the first rotational assembly 40 and/or the second rotational assembly 42 through the gear assembly 64.

In operation of the gas turbine engine 22 of FIG. 2, ambient air is directed through the fan section 28 and into a core flow path 72 (e.g., an annular flow path) and a bypass flow path 74 (e.g., an annular flow path) by rotation of the bladed fan rotor 58. Air flow along the core flow path 72 is compressed by the low-pressure compressor 30A and the high-pressure compressor 30B, mixed and burned with fuel in the combustor 38, and then directed through the high-pressure turbine 34A and the low-pressure turbine 34B. The bladed first turbine rotor 50 and the bladed second turbine rotor 56 rotationally drive the first rotational assembly 40 and the second rotational assembly 42, respectively, in response to the combustion gas flow through the high-pressure turbine 34A and the low-pressure turbine 34B. Air flow along the bypass flow path 74 is directed through the bypass duct 68. The electric machines 70 may be selectively operated to apply rotational force to the first rotational assembly 40 and/or the second rotational assembly 42 or to be driven by the first rotational assembly 40 and/or the second rotational assembly 42 to generate electrical power for the propulsion system 20 or the aircraft 1000.

Electric machines for a hybrid-electric propulsion system may additionally be operated to facilitate an engine start sequence by driving rotation of one or more spools of the gas turbine engine. However, the wide speed range of the gas turbine engine spools can be a challenge for electric machine starters at low spool rotation speeds. Conventionally, this may require use of a large electrical machine to provide the low-speed high-torque needed for an engine start sequence, while also meeting design constraints for high-speed power generation capability.

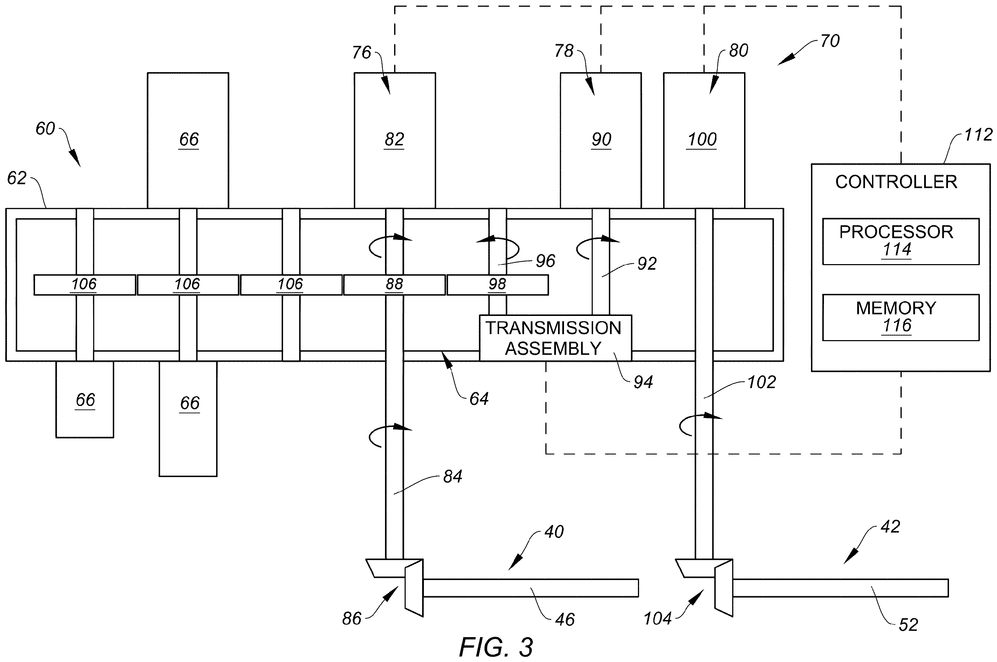

FIG. 3 schematically illustrates the accessory gear train 60, the accessory loads 66, and the electric machines 70 in greater detail. Each of the electric machines 70 may be configurable as an electric motor and/or an electric generator (e.g., an electric motor-generator). For example, during a motor mode of operation, the electric machines 70 may operate as the electric machine to convert electricity received from an aircraft electrical system (e.g., through a respective control unit) to mechanical power. By contrast, during a generator mode of operation, the electric machines 70 may operate as the electric generator to convert mechanical power received from the respective one of the rotational assemblies 40, 42 into electricity. The electric machines 70 of the present disclosure, however, are not limited to such exemplary operation. For example, one, more than one, or each of the electric machines 70 may alternatively each be configured as a dedicated electric generator (e.g., without the electric machine functionality) or as a dedicated electric machine (e.g., without the electric generator functionality). The electric machines 70 of FIG. 3 include a first electric machine 76, a second electric machine 78, and a third electric machine 80.

Each of the electric machines 70 may be electrically connected to or otherwise include a control unit (e.g., a motor control unit, a generator control unit, an inverter, etc.) For example, when operating as the electric motor, the respective control unit may be configured to regulate a flow of electricity from an aircraft electrical system to the respective electric machine 70. This electricity flow regulation may include: (a) turning-on the flow of electricity from the aircraft electrical system to the respective electric machine 70 (e.g., electrically coupling the respective electric machine 70 to the aircraft electrical system); (b) turning-off the flow of electricity from the aircraft electrical system to the respective electric machine 70 (e.g., electrically decoupling the respective electric machine 70 from the aircraft electrical system); (c) moderating the flow of electricity from the aircraft electrical system to the respective electric machine 70 (e.g., to control a rotation speed and/or torque of the respective electric machine 70). Here, the respective control unit may operate as a motor controller. In another example, when operating as the electric generator, the respective control unit may be configured to regulate a flow of electricity from the respective electric machine 70 to the aircraft electrical system. This electricity flow regulation may include: (a) turning-on the flow of electricity from the respective electric machine 70 to the aircraft electrical system (e.g., electrically coupling the respective electric machine 70 to the aircraft electrical system); (b) turning-off the flow of electricity from the respective electric machine 70 to the aircraft electrical system (e.g., electrically decoupling the respective electric machine 70 from the aircraft electrical system); (c) moderating the flow of electricity from the respective electric machine 70 to the aircraft electrical system. Here, the respective control unit may operate as a generator controller.

The first electric machine 76 includes a first rotor 82. The first rotor 82 is coupled with the first rotational assembly 40 (e.g., the first shaft 46) by the gear assembly 64. The gear assembly 64 of FIG. 3 includes a first shaft 84 extending between and coupling the first rotor 82 with the first rotational assembly 40, for example, at a bevel gear interface 86 between the first shaft 84 and the first rotational assembly 40. The gear assembly 64 further includes a first gear 88 mounted on the first shaft 84 between the first rotor 82 and the first rotational assembly 40, for example, within the accessory gear box 62.

The second electric machine 78 includes a second rotor 90. The gear assembly 64 includes a second shaft 92, a transmission assembly 94, and a third shaft 96 coupling the second rotor 90 with the first shaft 84. The second shaft 92 extends between and couples the second rotor 90 with the transmission assembly 94. The transmission assembly 94 couples (e.g., selectively couples) the second shaft 92 with the third shaft 96. The transmission assembly 94 may include a single-speed transmission or a multi-speed transmission (e.g., a two-speed transmission) coupling the second shaft 92 with the third shaft 96. Alternatively, the transmission assembly 94 may include a continuously variable transmission (CVT), a hydrostatic transmission, or another suitable transmission configuration coupling the second shaft 92 with the third shaft 96. The gear assembly 64 further includes a second gear 98 mounted on the third shaft 96, for example, within the accessory gear box 62. The second gear 98 is engaged (e.g., meshed) with the first gear 88. The transmission assembly 94 may additionally include a clutch operable to engage (e.g., clutch) or disengage (e.g., declutch) the second shaft 92 from the third shaft 96.

The third electric machine 80 includes a third rotor 100. The third rotor 100 is coupled with the second rotational assembly 42 (e.g., the second shaft 52) by the gear assembly 64. The gear assembly 64 of FIG. 3 includes a fourth shaft 102 extending between and coupling the third rotor 100 with the second rotational assembly 42, for example, at a bevel gear interface 104 between the fourth shaft 102 and the second rotational assembly 42. The fourth shaft 102 may form a direct drive coupling between the third rotor 100 and the second rotational assembly 42; however, the present disclosure is not limited to this foregoing exemplary coupling configuration of the third electric machine 80 with the second rotational assembly 42. The third rotor 100 of FIG. 3 is mechanically independent of the first rotor 82 and the second rotor 90. **In** other words, the third rotor 100 of FIG. 3 is not directly or indirectly mechanically coupled with the first rotor 82 or the second rotor 90.

As shown, for example, in FIG. 3, the gear assembly 64 may additionally couple the accessory loads 66 with the first rotational assembly 40 and the first rotor 82. For example, the gear assembly 64 may include one or more accessory gears 106 engaged (e.g., meshed) with the first gear 88 or otherwise driven by rotation of the first gear 88 (e.g., through one or more other accessory gears 106). Each of the accessory loads 66 may be rotationally coupled with one of the accessory gears 106. While the accessory loads 66 are shown in FIG. 3 coupled with the first rotor 82 and the first rotational assembly 40, the accessory loads 66 may additionally or alternatively be coupled with the third rotor 100 and the second rotational assembly 42 in a similar manner.

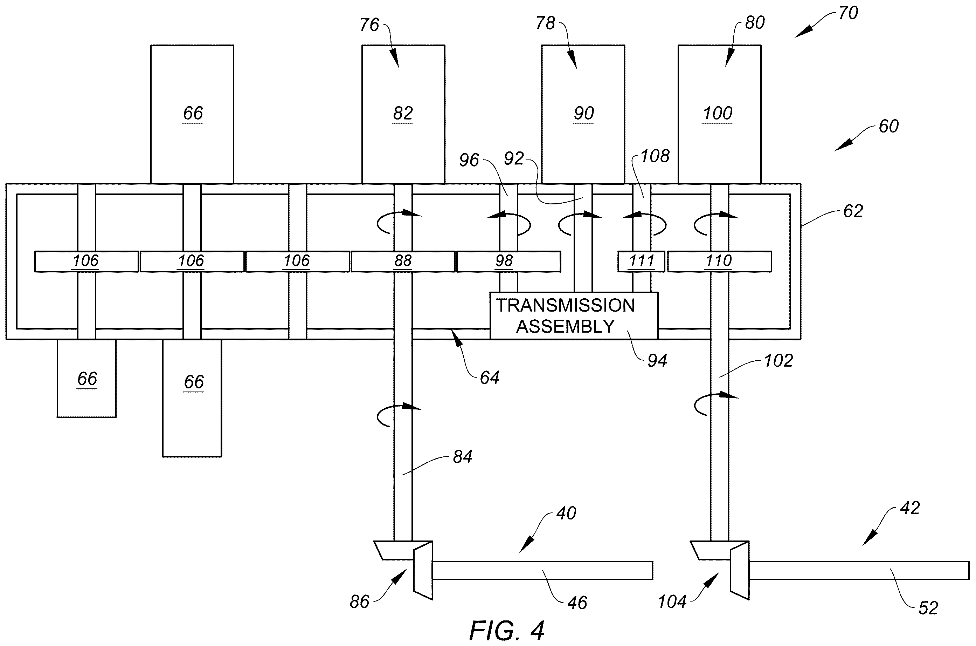

Referring to FIG. 4, in some embodiments, the third rotor 100 and the second rotational assembly 42 may be selectively coupled with the second rotor 90 by the transmission assembly 94. For example, the gear assembly 64 of FIG. 4 further includes a fifth shaft 108, a third gear 110, and a fourth gear 111. The fifth shaft 108 is coupled with the transmission assembly 94. The transmission assembly 94 couples (e.g., selectively couples) the fifth shaft 108 with the second shaft 92. The transmission assembly 94 may include a single-speed transmission or a multi-speed transmission (e.g., a two-speed transmission) coupling the fifth shaft 108 with the second shaft 92. Alternatively, the transmission assembly 94 may include a continuously variable transmission (CVT), a hydrostatic transmission, or another suitable transmission configuration coupling the fifth shaft 108 with the second shaft 92. The transmission assembly 94 may additionally include a clutch operable to engage (e.g., clutch) or disengage (e.g., declutch) the fifth shaft 108 from the second shaft 92. The third gear 110 is mounted on the fourth shaft 102. The fourth gear 111 is mounted on the fifth shaft 108. The third gear 110 is engaged (e.g., meshed) with the fourth gear 111.

Referring again to FIG. 3, the propulsion system 20 may include a controller 112 configured to facilitate operation of the electric machines 70 and the accessory gear train 60. The controller 112 is connected in signal communication with the electric machines 70 and the transmission assembly 94. The controller 112 includes a processor 114 connected in signal communication with memory 116. The processor 114 may include any type of computing device, computational circuit, processor(s), central processing unit (CPU), graphics processing unit (GPU), computer, or the like capable of executing a series of instructions that are stored in the memory 116. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the controller 112 and its processor 114 to accomplish the same algorithmically and/or by coordination of propulsion system 20 components including, but not limited to, the electric machines 70 and the transmission assembly 94. For example, the controller 112 may control an energization state, a rotation speed, a torque, and/or a mode of operation (e.g., motoring or generating) of each of the electric machines 70 (e.g., by controlling a control unit of each of the electric machines 70). The controller 112 may also control the transmission assembly 94 to change a gear ratio between the second shaft 92 and the third shaft 96 and/or between the second shaft 92 and the fifth shaft 108. The controller 112 may also control the transmission assembly 94 to clutch or declutch the second shaft 92 from the third shaft 96 and/or clutch or declutch the second shaft 92 from the fifth shaft 108. The memory 116 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly and/or indirectly coupled to the controller 112. The controller 112 may include, or may be in communication with, a user interface including one or more inputs devices and/or one or more output devices, for example, an input device that enables a user to enter data and/or instructions and an output device configured to display information (e.g., a visual display or a printer), or to transfer data, etc. Communications between the controller 112 and external electrical or electronic devices may be via a hardwire connection or via a wireless connection. A person of skill in the art will recognize that portions of the controller 112 may assume various forms (e.g., digital signal processor, analog device, etc.).

The controller 112 may form or otherwise be part of an engine control unit (ECU) for the propulsion system 20. The ECU may control operating parameters of the gas turbine engine 22 including, but not limited to, fuel flow, variable vane positions, compressor bleed air, shaft 46, 52 torque and/or rotation speed, etc. so as to control an engine power or performance of the gas turbine engine 22. In some embodiments, the ECU may be part of a full authority digital engine control (FADEC) system for the propulsion system 20.

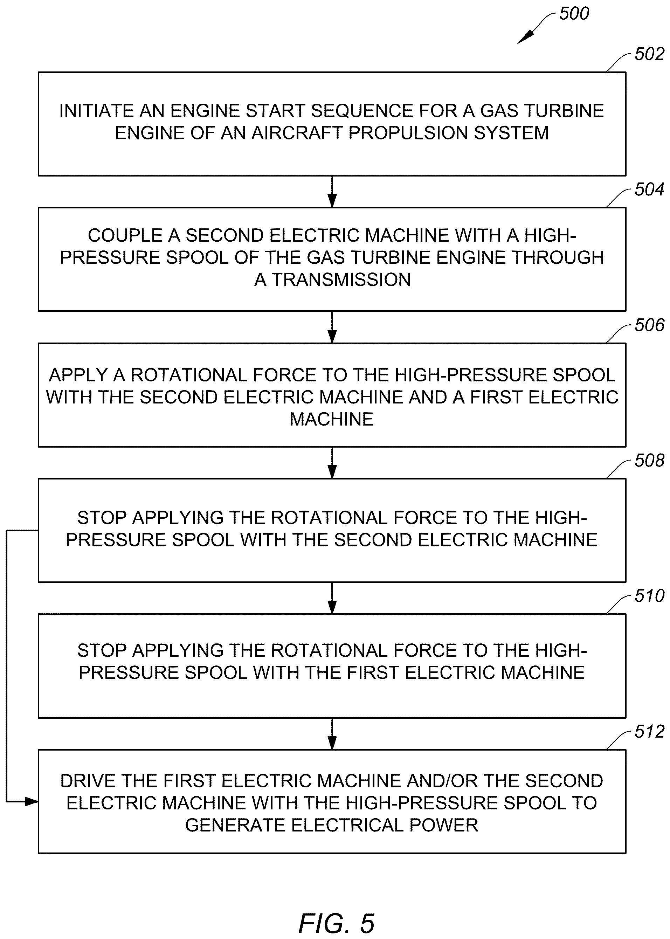

Referring to FIGS. 3, 4, and 5, a method 500 for executing a gas turbine engine start sequence is provided. FIG. 5 illustrates a flowchart for the method 500. The method 500 may be performed for the propulsion system 20, as described herein. For example, the method 500 may be performed for the gas turbine engine 22, the accessory gear train 60, and the electric machines 70. The controller 112 may be used to execute or control one or more steps of the method 500. For example, the processor 114 may execute instructions stored in the memory 116, thereby causing the controller 112 and/or its processor 114 to execute or otherwise control one or more steps or step portions of the method 500. However, it should be understood that the method 500 is not limited to use with the propulsion system 20 and its gas turbine engine 22, accessory gear train 60, electric machines 70, and controller 112. Unless otherwise noted herein, it should be understood that the steps of method 500 are not required to be performed in the specific sequence in which they are discussed below and, in some embodiments, the steps of method 500 may be performed separately or simultaneously.

Step 502 includes initiating an engine start sequence for the gas turbine engine 22. For example, the engine start sequence may be initiated by a pilot or other operator of the aircraft 1000 (see FIG. 1), which initiation may be communicated to the controller 112 and further executed, in full or in part, by the controller 112. Step 504 includes coupling the second electric machine 78 (e.g., the second rotor 90) to the first rotational assembly 40 with the transmission assembly 94, for example, by clutching the second shaft 92 with the third shaft 96 through the transmission assembly 94. The controller 112 may control the transmission assembly 94 in a starter mode, whereby the second electric machine 78 is coupled with the first rotational assembly 40 by the transmission assembly 94.

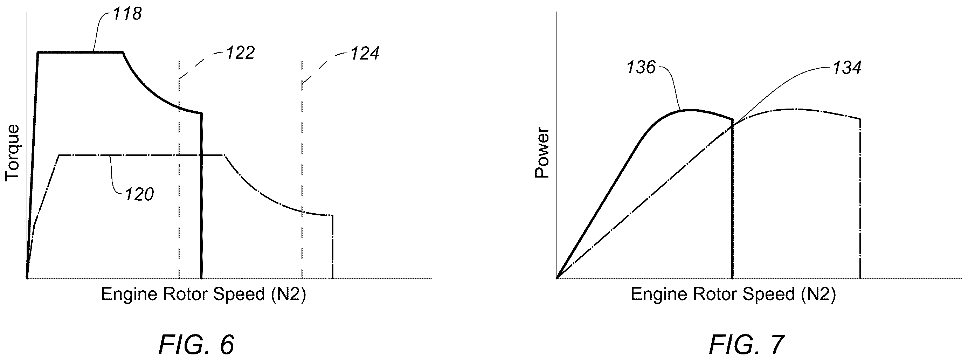

Step 506 includes operating the first electric machine 76 and the second electric machine 78 to apply rotational force to the first rotational assembly 40 to initiate and/or accelerate rotation of the first rotational assembly 40 (e.g., from a stationary or windmilling condition) for the engine start sequence. FIG. 6 illustrates torque outputs of the first electric machine 76 and the second electric machine 78 vs. first rotational assembly 40 speed (N₂) for an exemplary engine start sequence. FIG. 7 illustrates a first power output 134 of the first electric machine 76 and a second power output 136 of the second electric machine 78 vs. first rotational assembly 40 speed (N₂) for the engine start sequence. As shown in FIG. 6, at an initiation of the engine start sequence, a torque output 118 of the second electric machine 78 at the first shaft 84 is higher (e.g., significantly higher) than a torque output 120 of the first electric machine 76 at the first shaft 84. The higher torque output 118 of the second electric machine 78 is augmented by the gear assembly 64 (e.g., the first gear 88, the transmission assembly 94, and the second gear 98) relative to the torque output 120 of the first electric machine 76. For example, the first electric machine 76 may have a direct drive coupling with the first rotational assembly 40 through the first shaft 84; however, the present disclosure is not limited to this foregoing exemplary coupling configuration of the first electric machine 76 with the first rotational assembly 40. The first electric machine 76 may have a gear ratio (GR₁) between the first rotor 82 and the first rotational assembly 40 between 1.0 and 6.0 (inclusive). The gear ratio (GR₁) may be expressed, for example, as a ratio of the first electric machine 76 redline speed vs. the first rotational assembly 40 redline speed. A gear ratio (GR1-2) between the first electric machine 76 and the second electric machine 78 may be between 1.0 and 4.0 (inclusive). The first electric machine 76 and/or the second electric machine 78 may continue to drive acceleration of the first rotational assembly 40 throughout the engine start sequence and through rotational speed stages of the engine start sequence such as ground-idle fuel cut-on speed 122 and windmill relight assistance speed 124.

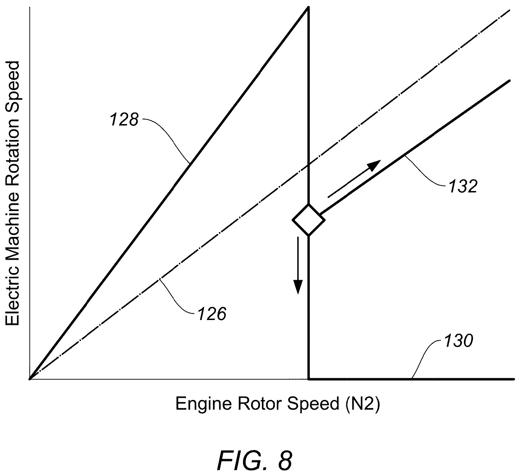

Step 508 includes stopping the second electric machine 78 from applying rotational force to the first rotational assembly 40 for the engine start sequence. For example, step 508 may include controlling the second electric machine 78 to stop applying rotational force to the first rotational assembly 40 at or after (e.g., shortly after) the first rotational assembly 40 reaches the ground-idle fuel cut-on speed 122 during the engine start sequence. The combustion light-off at the ground-idle fuel cut-on speed 122 may be characterized, for example, by an initial injection of fuel into the combustor 38 (e.g., a "fuel on" step), a brief delay (e.g., up to a few seconds), and then ignition of the fuel in the combustor 38 (e.g., combustion light-off). FIG. 8 illustrates rotor rotation speeds of the first electric machine 76 and the second electric machine 78 vs. first rotational assembly 40 speed (N₂) for the engine start sequence. In particular, FIG. 8 illustrates a first rotation speed 126 of the first electric machine 76 and a second rotation speed 128 of the second electric machine 78 for the engine start sequence. The controller 112 may selectively control the transmission assembly 94 in one of a neutral mode 130 or a generator mode 132 for the second electric machine 78. In the neutral mode 130, the controller 112 may control the transmission assembly 94 to decouple the second electric machine 78 (e.g., the second rotor 90) from the first rotational assembly 40, for example, by declutching the second shaft 92 from the third shaft 96 through the transmission assembly 94. In the generator mode 132, the controller 112 may control the transmission assembly 94 to reduce the gear ratio (e.g., for a multi-speed transmission) between the second electric machine 78 and the first rotational assembly 40 to facilitate electrical generation by the second electric machine 78 driven from the first rotational assembly 40. With the transmission assembly 94 operating in the neutral mode 130 or the generator mode 132, the controller 112 may control the first electric machine 76 to continue to apply rotational force to the first rotational assembly 40 for the engine start sequence, as shown in FIGS. 6-8.

Step 510 includes stopping the first electric machine 76 from applying rotational force to the first rotational assembly 40, for example, at a completion of the engine start sequence. The controller 112 may control the first electric machine 76 to stop applying rotational force to the first rotational assembly 40 once the first rotational assembly 40 rotation speed (N₂) reaches a self-sustaining speed (SSP) threshold wherein the combustion cycle of the gas turbine engine 22 is sufficient to maintain the rotation speed of the first rotational assembly 40 and the second rotational assembly 42 without assistance from the electric machines 70. In some embodiments, such as during an in-flight restarting of the gas turbine engine 22 (e.g., relight), the controller 112 may control the first electric machine 76 to continue applying rotational force to the first rotational assembly 40 to the windmill relight assistance speed 124, at which point the controller 112 may control the first electric machine 76 to stop applying rotational force to the first rotational assembly 40.

Step 512 includes generating electrical power with one or both of the first electric machine 76 or the second electric machine 78, subsequent to completion of the engine start sequence (e.g., steps 502, 504, 506, 508, and/or 510) and driven by the first rotational assembly 40. The first rotational assembly 40 may drive the first electric machine 76 and/or the second electric machine 78, through the accessory gear train 60, to generate electrical power for electrical loads of the propulsion system 20 and/or the aircraft 1000 (see FIG. 1).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A hybrid-electric aircraft propulsion system (20) comprising:
a gas turbine engine (22) comprising a first rotational assembly (40) rotatable about a rotational axis (44) of the gas turbine engine (22);
an electrical assembly (26) comprising a plurality of electric machines (70), the plurality of electric machines (70) comprising a first electric machine (76) and a second electric machine (78); and
a gear train (60) comprising a first shaft (84), a second shaft (92), a third shaft (96), a first gear (88), a second gear (98), and a transmission assembly (94), the first shaft (84) coupling the first electric machine (76) with the first rotational assembly (40), the second shaft (92) being coupled with the second electric machine (78), the second shaft (92) being selectively coupled with the third shaft (96) by the transmission assembly (94), the first gear (98) being mounted on the first shaft (84), the second gear (98) being mounted on the third shaft (96) and engaged with the first gear (88).

2. The hybrid-electric aircraft propulsion system of claim 1, wherein the first shaft (84) forms a direct drive coupling between the first electric machine (76) and the first rotational assembly (40).

3. The hybrid-electric aircraft propulsion system of claim 1 or 2, wherein the transmission assembly (94) forms a multi-speed transmission coupling the second shaft (92) with the third shaft (96).

4. The hybrid-electric aircraft propulsion system of any preceding claim, wherein the gas turbine engine (20) comprises a second rotational assembly (42), the plurality of electric machines (70) comprises a third electric machine (80), the gear train (60) comprises a fourth shaft (102), and the fourth shaft (102) couples the third electric machine (80) with the second rotational assembly (42), optionally wherein the first rotational assembly (40) forms a high-pressure spool (40) of the gas turbine engine (20) and the second rotational assembly (42) forms a low-pressure spool (42) of the gas turbine engine (20).

5. The hybrid-electric aircraft propulsion system of claim 4, wherein the gear train (60) comprises a fifth shaft (108), a third gear (110), and a fourth gear (111), the transmission assembly (94) selectively couples the fifth shaft (108) and the second shaft (92), the third gear (110) is mounted on the fourth shaft (102), the fourth gear (111) is mounted on the fifth shaft (108) and engaged with the third gear (110).

6. The hybrid-electric aircraft propulsion system of any preceding claim, further comprising at least one accessory load (66) being coupled with the first shaft (84) at the first gear (88).

7. The hybrid-electric aircraft propulsion system of any preceding claim, further comprising a controller (112) connected in signal communication with the first electric machine (76), the second electric machine (78), and the transmission assembly (94), the controller (112) comprising a processor (114) being connected in signal communication with a non-transitory memory (116) storing instructions which, when executed by the processor (114), cause the processor (114) to execute an engine start sequence for the gas turbine engine (20) by:
controlling the first electric machine (76) and the second electric machine (78) to apply a first rotational force and a second rotational force, respectively, to the first rotational assembly (40);
controlling the second electric machine (78) to stop applying the second rotational force to the first rotational assembly (40) at a first rotation speed of the first rotational assembly (40); and
controlling the first electric machine (76) to stop applying the first rotational force to the first rotational assembly (40) at a second rotation speed of the first rotational assembly (40), the second rotation speed greater than the first rotation speed,
optionally wherein the instructions, when executed by the processor (114), further cause the processor (114) to execute the engine start sequence for the gas turbine engine (20) by:
controlling the second electric machine (78) to stop applying the second rotational force to the first rotational assembly (40) by controlling the transmission assembly (94) in a neutral mode (130) to disengage the second electric machine (78) from the first rotational assembly (40); or
controlling the second electric machine (78) to apply the second rotational force to the first rotational assembly (40) by controlling the transmission assembly (94) to couple the second electric machine (78) with the first rotational assembly (40) at a first gear ratio, and controlling the second electric machine (78) to stop applying the second rotational force to the first rotational assembly (40) by controlling the transmission assembly (94) in a generator mode (132) to couple the second electric machine (78) with the first rotational assembly (40) at a second gear ratio different than the first gear ratio.

8. A method for executing an engine start sequence for a gas turbine engine (22) of a hybrid-electric aircraft propulsion system (20), the method comprising:
applying a first rotation force and a second rotational force to a first rotational assembly (40) of the gas turbine engine (22) with a first electric machine (76) and a second electric machine (78), respectively, the first electric machine (76) being coupled with the first rotational assembly (40) by a first shaft (84), the second electric machine (78) being coupled with the first rotational assembly (40) by a second shaft (92), a third shaft (96), a first gear (88), a second gear (98), and a transmission assembly (94), the second shaft (92) being coupled with the second electric machine (78), the transmission assembly (94) coupling the second shaft (92) and the third shaft (96), the first gear (88) being mounted on the first shaft (84), the second gear (98) being mounted on the third shaft (96) and engaged with the first gear (88);
stopping applying the second rotational force to the first rotational assembly (40) with the second electric machine (78) at a first rotation speed of the first rotational assembly (40);
stopping applying the first rotational force to the first rotational assembly (40) with the first electric machine (76) at a second rotation speed of the first rotational assembly (40), the second rotation speed being greater than the first rotation speed.

9. The method of claim 8, further comprising driving one or both of the first electric machine (76) or the second electric machine (78) with the first rotational assembly (40) to generate electrical power subsequent to stopping applying the first rotational force and the second rotational force.

10. The method of claim 8 or 9, wherein stopping applying the second rotational force to the first rotational assembly (40) with the second electric machine (78) comprises disengaging the second electric machine (78) from the first rotational assembly (40) with the transmission assembly (94).

11. The method of claim 8 or 9, wherein:
applying the second rotational force to the first rotational assembly (40) with the second electric machine (78) comprises coupling the second electric machine (78) and the first rotational assembly (40) with the transmission assembly (94) at a first gear ratio; and
stopping applying the second rotational force to the first rotational assembly (40) with the second electric machine (78)_comprises coupling the second electric machine (78) and the first rotational assembly (40) with the transmission assembly (94) at a second gear ratio different than the first gear ratio.

12. The method of any of claims 8 to 11, wherein the second rotation speed is a windmill relight assistance speed (124) for the gas turbine engine (20).

13. The method of any of claims 8 to 12, wherein applying the first rotation force and the second rotational force to the first rotational assembly (40) with the first electric machine (76) and the second electric machine (78), respectively, comprises operating the first electric machine (76) at a first output torque (120) applied at the first shaft (84) and operating the second electric machine (78) at a second output torque (118) applied at the first shaft (84), and the second output torque (118) is greater than the first output torque (120).

14. A hybrid-electric aircraft propulsion system (20) comprising:
a gas turbine engine (22) comprising a first rotational assembly (40) and a second rotational assembly (42), the first rotational assembly (40) and the second rotational assembly (42) being rotatable about a rotational axis (44) of the gas turbine engine (20);
an electrical assembly (26) comprising a plurality of electric machines (70), the plurality of electric machines (70) comprising a first electric machine (76), a second electric machine (78), and a third electric machine (80); and
a gear train (60) comprising a first shaft (84), a second shaft (92), a third shaft (96), a fourth shaft (102), a first gear (88), a second gear (98), and a transmission assembly (94), the first shaft (84) coupling the first electric machine (76) with the first rotational assembly (40), the second shaft (92) being coupled with the second electric machine (78), the transmission assembly (94) being configured to couple the second shaft (92) with the third shaft (96), the first gear (88) being mounted on the first shaft (84), the second gear (98) being mounted on the third shaft (96) and engaged with the first gear (88), the fourth shaft (102) coupling the third electric machine (80) with the second rotational assembly (42).

15. The hybrid-electric aircraft propulsion system of claim 14, wherein:
the third electric machine (80) is mechanically independent of the first electric machine (76), the second electric machine (78), and the first rotational assembly (40); and/or
the transmission assembly (94) is configured to couple the fourth shaft (102) with the second shaft (92), optionally wherein the gear train (60) comprises a fifth shaft (108), a third gear (110), and a fourth gear (111), the transmission assembly (94) selectively couples the fifth shaft (108) and the second shaft (92), the third gear (110) is mounted on the fourth shaft (102), the fourth gear (111) is mounted on the fifth shaft (108) and engaged with the third gear (110).
